# EUROPEAN PATENT SPECIFICATION

(11) **EP 1 139 532 B1**
(45) Date of publication and mention of the grant of the patent: **19.02.2003**
(21) Application number: 01108024.9
(22) Date of filing: 29.03.2001
(51) Int. Cl.: H02B 1/06, H02B 1/44

(54) **Switchboard and frame member**
Schaltfeld und Rahmenteil
Tableau de commutation et élément de chassis

(30) Priority: 30.03.2000 JP 2000094530
(43) Date of publication of application: 04.10.2001
(73) Proprietor: Terasaki Denki Sangyo Kabushiki Kaisha, Osaka City, Osaka (JP)
(72) Inventor: Yamamoto, Mitsuo, Hashimoto-shi, Wakayama (JP); Kita, Miwa, Osaka-shi, Osaka (JP)
(74) Representative: Prüfer, Lutz H., Dipl.-Phys.

(56) References cited:
- US-A- 2 603 546
- US-A- 3 989 986
- US-A- 5 886 868

## Description

### BACKGROUND OF THE INVENTION

### Field of the Invention

The present invention relates to a switchboard, and more particularly, to a switchboard on which a relatively large number of circuit breakers for wiring are mounted.

### Description of the Background Art

Some switchboards for ships and vessels include a number of circuit breakers mounted thereon for providing a power-supply to electric loads called feeder panels.

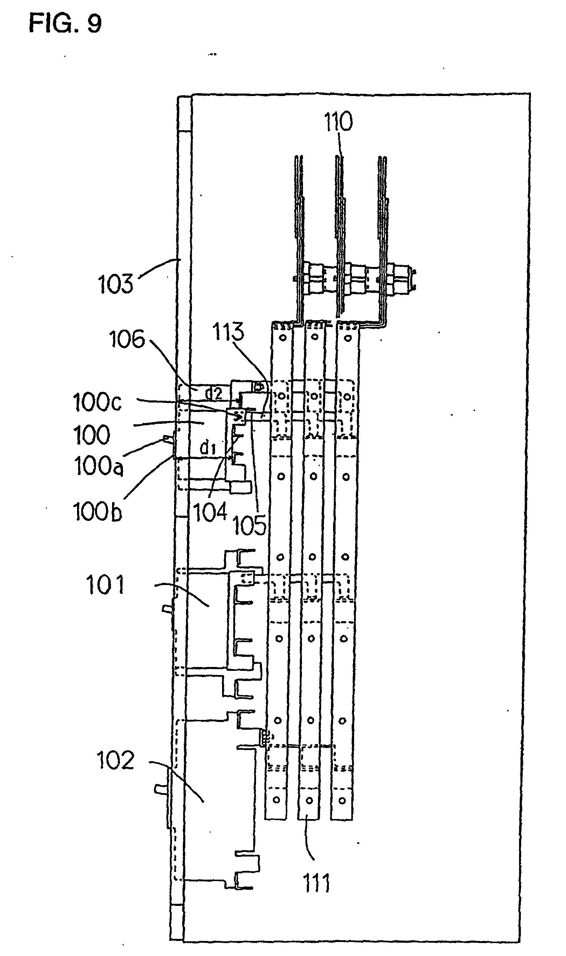

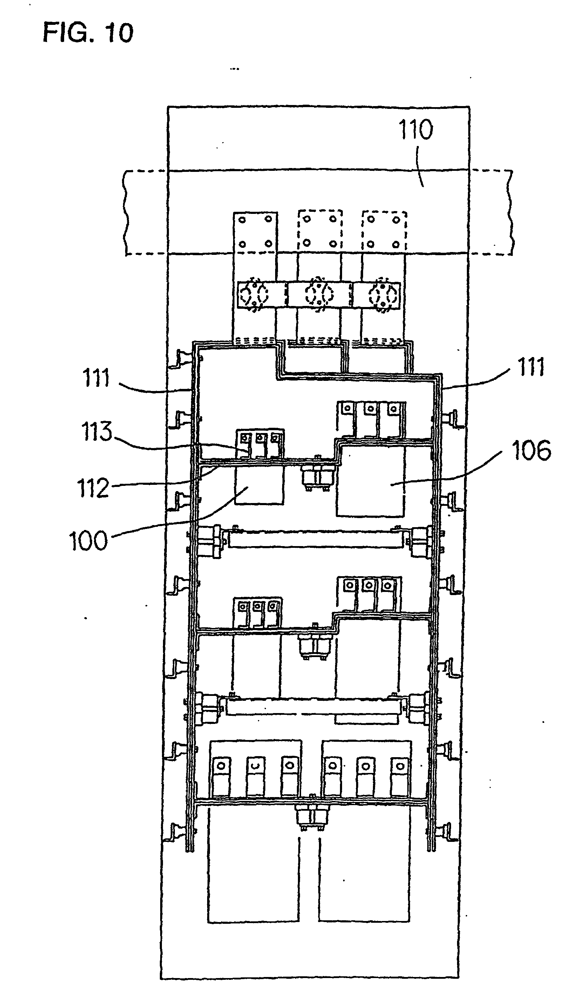

Figs. 9 and 10 show a switchboard disclosed in a Japanese Utility Model Publication No. 1-40256 as an example of a conventional art. A plurality of circuit breakers for wiring 100, 101 and 102 are mounted on the front surface of the switchboard. Each circuit breaker for wiring (for example, circuit breaker for wiring 100) contains a make-break contact within a case made of an insulation material. The make-break contact can be operated by operating a handle 100a protruding from the insulation case in the vertical direction.

A portion of a surface of the insulation case from which handle 100a protrudes is provided with a bank portion 100b having a rectangular shape when viewed from the front so as to enclose handle 100a. An opening portion is formed at a surface panel 103 of a switchboard, to which bank portion 100b of circuit breaker for wiring 100 fits. The opening portion is formed to have a shape that approximately corresponds with the contour of bank portion 100b for safety and aesthetic reasons. Further, a circuit breaker for wiring 106 having a height different from that of circuit breaker for wiring 100 is mounted on a mounting member 105. Mounting member 104 and mounting member 105 of circuit breaker for wiring 100 are connected to each other by welding.

A main circuit conductive portion of the switchboard is now described. The switchboard is used in a three-phase power-supply system, and a copper-strip vertical conductor 111 and a copper-strip horizontal conductor 112 connected to vertical conductor 111 and extending in a horizontal direction are arranged inside of the switchboard. Vertical conductor 111 is connected to a main bar 110 connected to a power-supply. Horizontal conductor 112 is connected to a power-supply-side terminal 100c of the circuit breaker for wiring by a terminal connecting conductor 113.

A following problem has been raised upon mounting of a circuit breaker for wiring having an above-described configuration onto a conventional switchboard. That is, fine adjustment was required for lengthwise, widthwise and depth mounting positions of circuit breaker for wiring 100 such that bank portion 100b of the circuit breaker for wiring fits into the opening portion of surface panel 103 when the surface panel is closed. Further, for different types of circuit breakers, e.g. circuit breaker for wiring 100 and circuit breaker for wiring 106 with different heights, it was necessary to connect two mounting members 104 and 105 by welding to attain respective distances d1 and d2 from surface panel 103. Thus, there has been a further problem such that a mounting member or a surface panel had to be fabricated again when replacement was required from one type of circuit breaker for wiring to a different type of circuit breaker for wiring due to a change to the specification.

From the US Patent 3,989,986 a switch board according to the preamble of claim 1 can be taken.

### SUMMARY OF THE INVENTION

An object of the present invention is to provide a switchboard for solving the problems described above.

This object is solved by a switchboard according to claim 1.

Use of the frame member described above allows safe operation, since the surrounding wall extending in the depth direction exits even if the circuit breaker for wiring is mounted at a distance away from the surface panel of the switchboard in the depth direction. Further, the bank portion of the circuit breaker for wiring is located inside of the switchboard, so that some degree of displacement between the bank portion and the opening portion inside of the frame member would not spoil the aesthetic appearance.

Typically, the opening portion of the front panel has a shape of a quadrangle. In this case, the frame member has an upper wall portion, a lower wall portion, a right-side wall portion and a left-side wall portion extending in the depth direction.

Preferably, the lower wall portion is sloped downward toward the front panel side. This allows drainage of water along the lower wall portion even if water droplets enters from the outside into the frame member, so that entrance of water into the switchboard can be prevented.

Preferably, the frame member has a rear wall portion connected to depth ends of the upper wall portion, the lower wall portion, the right-side wall portion and the left-side wall portion. An opening for exposing the contact operation part is formed on the rear wall portion. The existence of the rear wall can more effectively prevent entrance of water into the switchboard.

In the present invention described above, the first frame member and the second frame member are interchangeable in terms of mounting to the front panel. Therefore, even in a case where different types of circuit breakers for wiring are mounted, the circuit breakers for wiring can be mounted on a common mounting surface if they are respectively combined with corresponding frame members. In other words, the switchboard can be standardized at least in a part thereof, and the type of the circuit breaker for wiring can be easily changed even after completion of assembling of the switchboard.

The switchboard includes a plurality of unit cabinets vertically stacked each having a shape of a rectangular parallelepiped. In this case, the front panel of the switchboard is formed by a front wall of the unit cabinet. The circuit breaker for wiring is mounted on the rear wall of each of the unit cabinets, and the frame member is mounted on the front wall of each of the unit cabinets. This allows a circuit breaker for wiring and a frame member adapted therefor to be mounted per unit cabinet, eliminating the need for a special scheme for mounting for each of different types of circuit breakers for wiring.

Preferably, the plurality of unit cabinets have a same width dimension when viewed from a front side and connected to a side plate of the switchboard at their sides.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a side view showing the internal structure of an embodiment of a switchboard according to the present invention;
Fig. 2 is a front view of the switchboard shown in Fig. 1;
Fig. 3 is a perspective view showing a unit base and a front wall that are components of a unit cabinet;
Fig. 4 is a front view showing the internal structure of a unit cabinet containing circuit breakers for wiring;
Fig. 5 is a side view of the unit cabinet shown in Fig. 4;
Fig. 6 is a perspective view showing an embodiment of a frame member according to the present invention;
Fig. 7 is a side view of the frame member shown in Fig. 6;
Fig. 8 is a side view showing a principal structure of a unit cabinet on which a circuit breaker and a frame member are mounted;
Fig. 9 is a side view showing the internal structure of a conventional switchboard; and
Fig. 10 illustrates the switchboard shown in Fig. 9 when viewed from the rear side.

### DESCRIPTION OF THE PREFERRED EMBODIMENTS

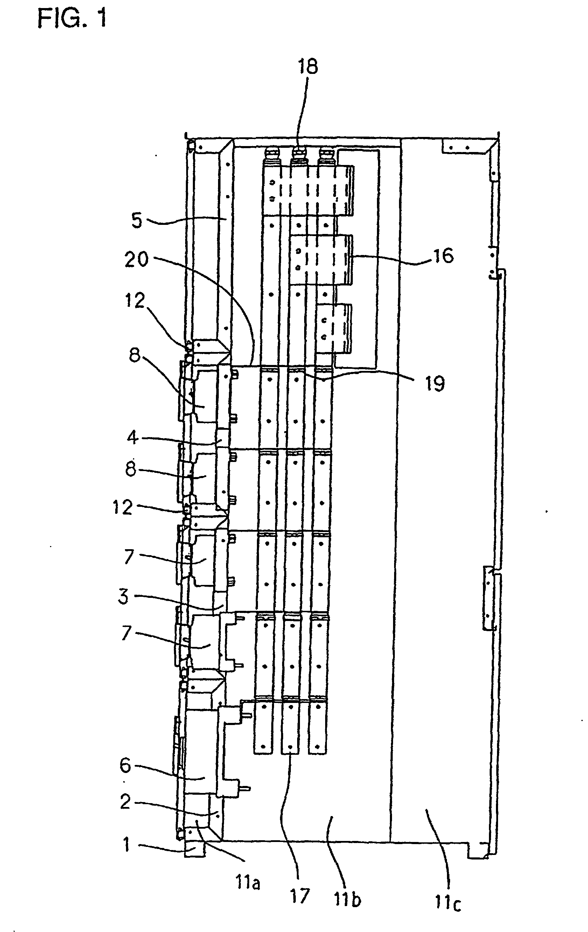

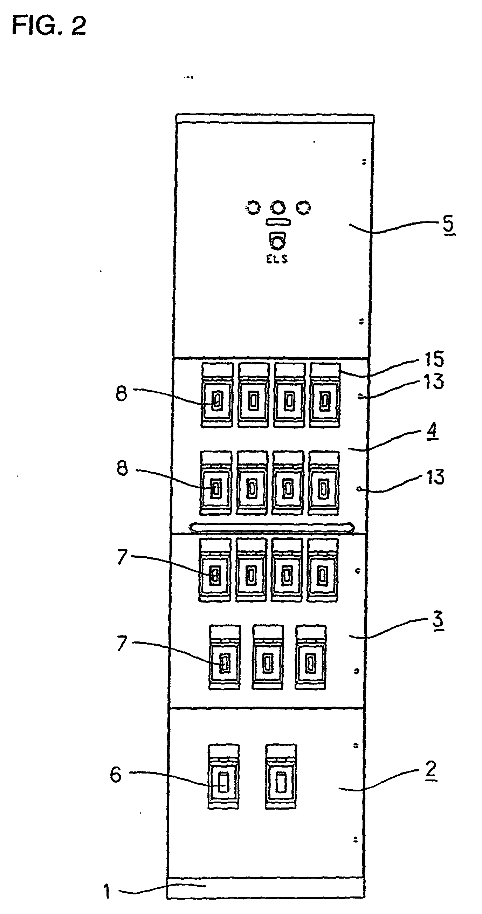

In Figs. 1 and 2, the switchboard has a hexahedron structure, which includes a front section on which a plurality of circuit breakers for wiring are mounted, a central section in which conductors connected to the circuit breakers for wiring are arranged, and a rear section in which various control wires (not shown in detail) are arranged.

Focusing on the structure of the front section, unit cabinets 2, 3, 4 and 5 are vertically stacked in this order on a base member 1. Between unit cabinet 2 and base member 1, and between vertically adjacent unit cabinets are connected by screws with each other. A plurality of relatively large circuit breakers for wiring 6 are mounted on unit cabinet 2 in a single horizontal row, and a plurality of relatively small circuit breakers for wiring 7 are mounted on unit cabinet 3 in each of two rows, i.e. upper and lower rows. As in the case of unit cabinet 3, circuit breakers for wiring 8 are mounted on unit cabinet 4. Unit cabinet 5 is located at a higher position, which makes operation difficult, so that no circuit breakers are mounted thereon.

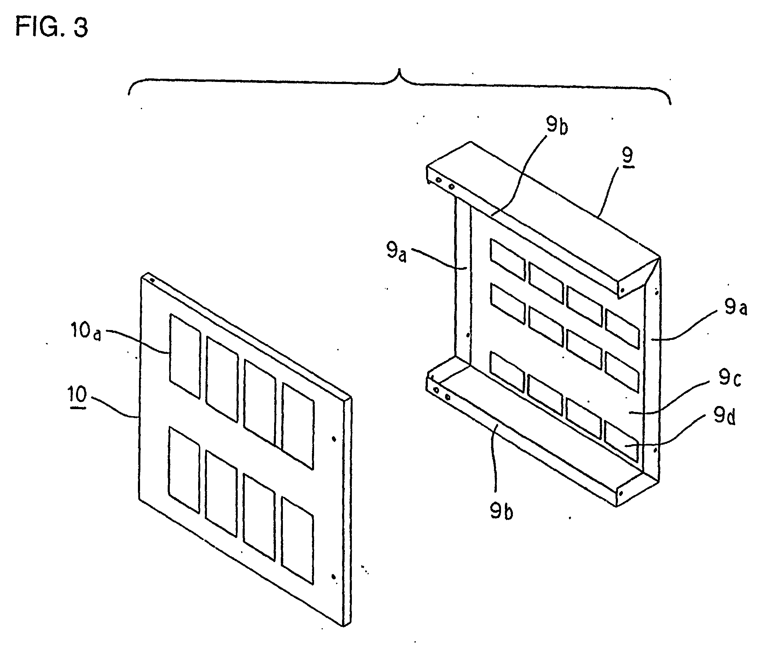

Unit cabinets 2, 3 and 4 have almost the same structure, and hence unit cabinet 4 is representatively described here unless otherwise specified. In Figs. 3, 4 and 5, unit cabinet 4 is formed by a thin steel plate, and is constituted by a U-shaped unit base 9 and a front wall 10 to have a shape of an approximate rectangular parallelepiped.

Unit base 9 has a side bent flap 9a and a front bent flap 9b at the edges thereof. Unit cabinets 2, 3, 4 and 5 all have the same width dimension (when viewed from the front) and the same depth dimension.

A side plate of the switchboard is made of a thin steel plate, including a front side plate 11a, an intermediate side plate 11b and a rear side plate 11c. Bent flaps are formed on the periphery of the side plate, and lugs of the bent flaps bent at the right angle are connected by screws with each other. Unit base 9 is connected with the side plate of the switchboard at side bent flap 9a by screws. Such a connection between the unit base and the side plate of the switchboard both bent at the right angle enables construction of the entire cabinet with a strength by a thin plate member.

It is noted that one side of front wall 10 is mounted on front bent flap 9b of unit base 9 by a hinge 12, and the other side of front panel 10 is connected to the side plate by a screw 13 fitted into a female screw member on the side plate to keep front wall 10 closed. Further, it is unnecessary to always form unit cabinets 2, 3, 4 and 5 to have the same depth dimension, though it was described above that they have the same depth dimension.

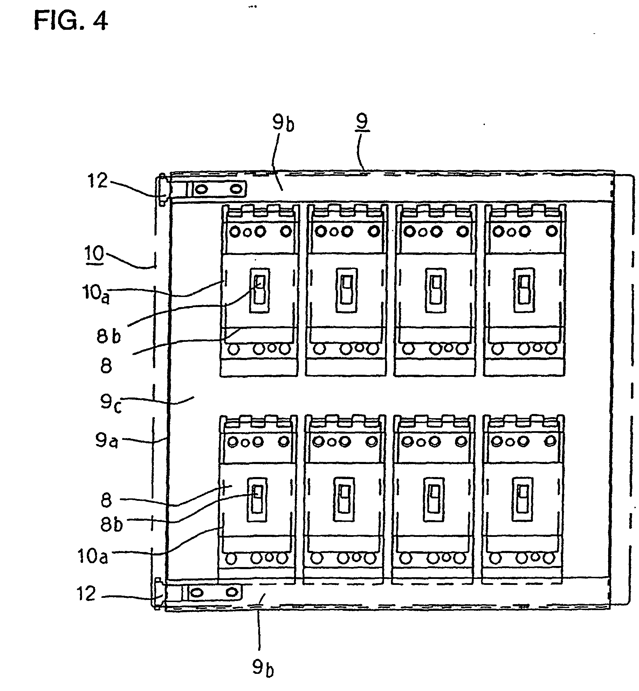

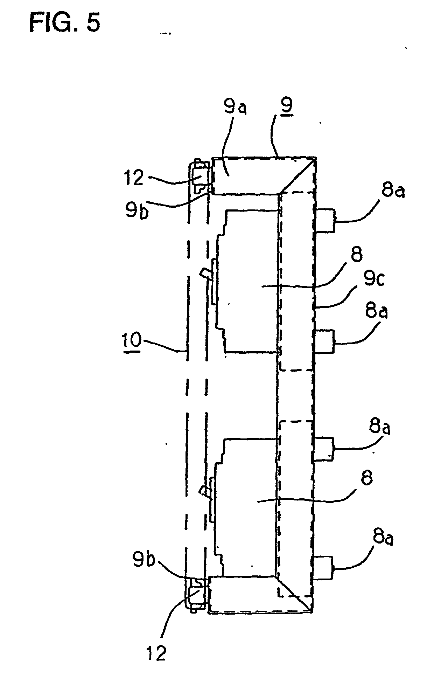

Circuit breaker for wiring 8 in unit cabinet 4 is mounted on rear wall 9c such that a terminal 8a of the circuit breaker for wiring protrudes through an opening portion 9d formed on rear wall 9c to the rear side. A large opening portion 10a is formed on front wall 10 of unit cabinet 4 at a position opposing to a handle 8b of circuit breaker for wiring 8, and a frame member 15 is mounted to opening portion 10a. It is noted that frame member 15 is not shown in Figs. 4 and 5.

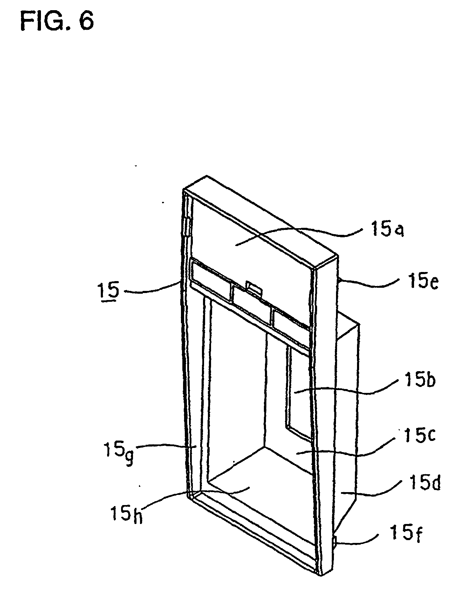

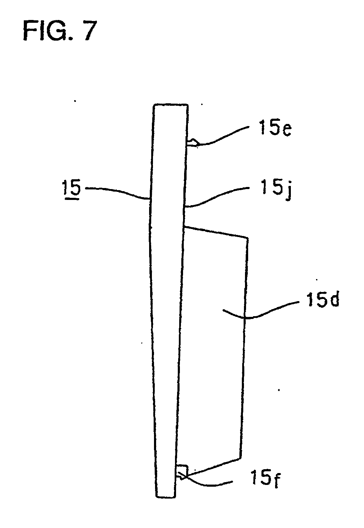

Referring to Figs. 6 and 7, frame member 15 includes a front part having an upper part in which a nameplate receiving region 15a is formed and an open lower part; a rear wall 15c at which an opening portion 15b is formed; upper, lower, left and right walls 15d connecting the front part and rear wall 15c; and claws 15e and 15f for mounting provided on upper and lower portions of the backside of the front part. The front part of frame member 15 is enclosed by a rectangular frame 15g, preventing water droplets from reaching rear wall 15c. Even if water droplets enter from the opening of the front part of frame member 15, the water will not come into the switchboard, since lower wall 15h slopes downward from the rear side toward the front part.

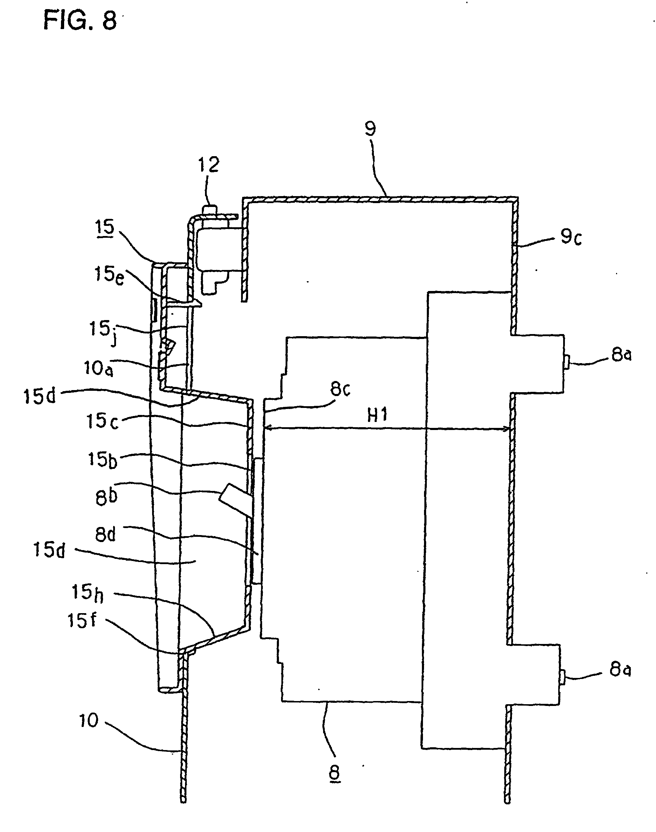

Referring to Fig. 8, when frame member 15 is mounted on front wall 10, a recess of lower claw 15f receives a lower edge of opening portion 10a of front panel 10, and the upper part of frame member 15 is pushed toward front wall 10. This allows engagement of the resilient upper claw 15e with the upper edge of opening portion 10a, so that frame member 15 can simply (for example, through one-touch operation) be mounted on front wall 10.

When frame member 15 is mounted in such a manner, rear wall 15c thereof is located to extend along a surface 8c of circuit breaker for wiring 8. Opening portion 15b fits the outer periphery of a bank portion 8d of the circuit breaker for wiring. Frame member 15 is selected in its shape and its position for mounting such that it would not interfere with operation of circuit breaker for wiring 8 and that circuit breaker for wiring 8 can be located without a safety hazard.

Frame member 15 is fabricated to accommodate to each type of circuit breaker for wiring 8 such that the distance from a mounting surface 15j of frame member 15 to surface 8c of the circuit breaker for wiring and the position in lengthwise and widthwise directions and the size of opening portion 15b of frame member 15 almost satisfy the structure and the positional relation described above. For example, a frame member having a larger depth dimension from mounting surface 15j to the rear side may be mounted on a circuit breaker for wiring having a small height dimension (denoted by H1 in Fig. 8) from rear wall 9c of unit base 9 to surface 8c of circuit breaker for wiring 8.

It is noted that bank portion 8d of the circuit breaker for wiring is located at an inner position away from the surface of the panel, so that it is unnecessary to always place opening portion 15b of the frame member at a position where opening portion 15b fits the periphery of bank portion 8d, as shown in Fig. 8, unless there are problems of safety, operation and aesthetic appearance. Further, the mounting portions of a plurality of types of frames 15 described above have the same dimension (e.g. the distance between claw 15e and claw 15f), so that any frame member can be mounted on opening 10a of front wall 10.

As shown in Fig. 1, the switchboard includes a vertical conductor 17 made of a copper strip, which is connected to a main bar 16 extending from an adjacent switchboard for a power-supply and is mounted via an insulation spacer 18; a horizontal conductor 19 made of a copper strip, which is mounted on vertical conductor 17; and a terminal connecting conductor 20 made of a copper strip, which connects horizontal conductor 19 and terminal 8a on the upper side of circuit breaker for wiring 8.

As described above, according to the present invention, no fine adjustment of the mounting position of a circuit breaker for wiring is required when a switchboard is assembled. Further, even if an opening portion of the front panel of the switchboard and a bank portion of the circuit breaker for wiring are displaced from each other in some degree, the aesthetic appearance will not be spoiled because the circuit breaker for wiring is positioned at a distance away from the front panel in the depth direction. Moreover, the circuit breaker for wiring may be pre-mounted into a unit cabinet before connecting the unit cabinet to a base member, side plates and a top plate to complete the switchboard, resulting in an easier and yet faster assembling work. Furthermore, the unit cabinet itself has an excellent intensity, eliminating the need for a special member for reinforcement. Provision of a plurality of frame members having different depth dimensions allows mounting of different types of circuit breakers for wiring on the same unit cabinet, and also easy replacement of the circuit breakers for wiring if there is a change to the specification.

## Claims

1. A switchboard containing a circuit breaker for wiring (8) having a contact operation part (8b) for operating a make-break contact, and an opening portion (10a), in a front panel (10) of the switchboard, for exposing said contact operation part (8b),
wherein
said circuit breaker for wiring (8) is located at a distance away from said front panel (10) in a depth direction, and
a frame member (15) having a surrounding wall (15d, 15h) extending in the depth direction is mounted on said opening portion (10a),
**characterized in that**
said switchboard comprises a first circuit breaker for wiring (8) and a second circuit breaker for wiring (6) mounted on a common mounting surface (9c) and having different sizes,
a first opening portion (10a) for exposing a contact operation part (8b) of said first circuit breaker for wiring (8) and a second opening portion for exposing a contact operation part of said second circuit breaker for wiring are formed on said front panel (10) of said switchboard,
said first opening portion (10a) and said second opening portion have a same shape and a same size,
a distance between said front panel (10) and said first circuit breaker for wiring (8) is larger than a distance between said front panel (10) and said second circuit breaker for wiring (6), and
a first frame member (15) mounted on said first opening portion (10a) has a depth dimension larger than a depth dimension of a second frame member mounted on said second opening portion.

2. The switchboard according to claim 1, wherein
said opening portion (10a) has a shape of a quadrangle, and
said frame member (15) has an upper wall portion (15d), a lower wall portion (15h), a right-side wall portion (15d) and a left-side wall portion (15d) extending in the depth direction.

3. The switchboard according to claim 2, wherein said lower wall portion (15h) is sloped downward toward said front panel (10) side.

4. The switchboard according to claim 2 or 3, wherein
said frame member (15) has a rear wall portion (15c) connected to depth ends of said upper wall portion (15d), said lower wall portion (15h), said right-side wall portion (15d) and said left-side wall portion (15d), and
an opening (15b) for exposing said contact operation part (8b) is formed in said rear wall portion (15c).

5. The switchboard according to any one of claims 1 to 4, wherein said switchboard comprises a plurality of unit cabinets (2, 3, 4, 5) vertically stacked each having a shape of a rectangular parallelepiped,
the front panel of said switchboard is formed by a front wall (10) of said unit cabinet,
said circuit breaker for wiring (8) is mounted on the rear wall (9c) of each of said unit cabinets, and
said frame member (15) is mounted on the front wall (10) of each of said unit cabinets.

6. The switchboard according to claim 5, wherein said plurality of unit cabinets (2, 3, 4) have a same width dimension when viewed from a front side and connected to a side plate of the switchboard at their sides.

## Patentansprüche

1. Schalttafel mit einem Ausschalter für Verdrahtung (8) mit einem Kontaktbetriebsteil (8b) zum Betätigen eines Umschaltkontaktes und einem Öffnungsabschnitt (10a) in einer vorderen Tafel (10) der Schalttafel zum Offenlegen des Kontaktbetriebsteiles (8b),
worin der Ausschalter für Verdrahtung (8) in einem Abstand von der vorderen Tafel (10) weg in einer Tiefenrichtung angeordnet ist und
ein Rahmenteil (15) mit einer umgebenden, sich in der Tiefenrichtung erstreckenden Wand (15d, 15h) in dem Öffnungsabschnitt (10a) angebracht ist,
**dadurch gekennzeichnet,**
**daß** die Schalttafel einen ersten Ausschalter für Verdrahtung (8) und einen zweiten Ausschalter für Verdrahtung (6), die auf einer gemeinsamen Anbringungsoberfläche (9c) angebracht sind und verschiedene Größen haben, aufweist,
ein erster Öffnungsabschnitt (10a) zum Offenlegen eines Kontaktbetriebsteiles (8b) des ersten Ausschalters für Verdrahtung (8) und ein zweiter Öffnungsabschnitt zum Offenlegen eines Kontaktbetriebsteiles des zweiten Ausschalters für Verdrahtung auf der vorderen Tafel (10) der Schalttafel vorgesehen sind,
der erste Öffnungsabschnitt (10a) und der zweite Öffnungsabschnitt die gleiche Form und die gleiche Größe aufweisen,
ein Abstand zwischen der vorderen Tafel (10) und dem ersten Ausschalter für Verdrahtung (8) größer ist als ein Abstand zwischen der vorderen Tafel (10) und dem zweiten Ausschalter für Verdrahtung (6) und
ein auf dem ersten Öffnungsabschnitt (10a) angebrachtes erstes Rahmenteil (15) eine Tiefenabmessung größer als eine Tiefenabmessung eines auf dem zweiten Öffnungsabschnitt angebrachten zweiten Rahmenteiles aufweist.

2. Schalttafel nach Anspruch 1,
bei der der Öffnungsabschnitt (10a) die Form eines Rechteckes aufweist und
das Rahmenteil (15) einen oberen Wandabschnitt (15d), einen unteren Wandabschnitt (15h), einen rechten Seitenwandabschnitt (15d) und einen linken Seitenwandabschnitt (15d) aufweist, die sich in der Tiefenrichtung erstrecken.

3. Schalttafel nach Anspruch 2, bei der der untere Wandabschnitt (15h) zu der Seite der vorderen Tafel (10) nach unten geneigt ist.

4. Schalttafel nach Anspruch 2 oder 3,
bei der das Rahmenteil (15) einen Rückwandabschnitt (15c) aufweist, der mit den Tiefenenden des oberen Wandabschnittes (15d), des unteren Wandabschnittes (15h), des rechten Seitenwandabschnittes (15d) und des linken Seitenwandabschnittes (15d) verbunden ist, und
eine Öffnung (15b) zum Offenlegen des Kontaktbetriebsteiles (8b) in dem Rückwandabschnitt (15c) gebildet ist.

5. Schalttafel nach einem der Ansprüche 1 bis 4, bei der die Schalttafel eine Mehrzahl von Einheitsschränken (2, 3, 4, 5) aufweist, die vertikal gestapelt sind, von denen jeder eine Form eines rechteckigen Parallelepipedes aufweist,
die vordere Tafel der Schalttafel durch eine vordere Wand (10) des Einheitsschrankes gebildet ist,
der Ausschalter für Verdrahtung (8) auf der Rückwand (9c) eines jeden der Einheitsschränke angebracht ist, und das Rahmenteil (15) auf der vorderen Wand (10) eines jeden der Einheitsschränke angebracht ist.

6. Schalttafel nach Anspruch 5, bei der die Mehrzahl von Einheitsschränken (2, 3, 4) die gleiche Breitenabmessung aufweisen, wenn sie von der Vorderseite gesehen werden, und mit einer Seitenplatte der Schalttafel an ihren Seiten verbunden sind.

## Revendications

1. Tableau de commutation contenant un disjoncteur pour câblage (8) ayant une partie effectuant le contact (8b) pour effectuer l'établissement-coupure du contact et une portion d'ouverture (10a), dans un panneau avant (10) du tableau de commutation, pour exposer ladite partie effectuant le contact (8b),
ledit disjoncteur pour câblage (8) étant placé à distance dudit panneau avant (10) dans une direction de profondeur et
un élément de châssis (15) ayant une paroi d'entourage (15d, 15h) qui s'étend dans la direction de profondeur étant monté sur ladite portion d'ouverture (10a),
**caractérisé en ce que** ledit tableau de commutation comprend un premier disjoncteur pour câblage (8) et un deuxième disjoncteur pour câblage (6) montés sur une surface de montage (9c) commune et ayant des tailles différentes,
une première portion d'ouverture (10a) pour exposer une partie effectuant le contact (8b) dudit premier disjoncteur pour câblage (8) et une deuxième portion d'ouverture pour exposer une partie effectuant le contact dudit deuxième disjoncteur pour câblage sont formées sur ledit panneau avant (10) dudit tableau de commutation,
ladite première portion d'ouverture (10a) et ladite deuxième portion d'ouverture ont une même forme et une même taille,
une distance entre ledit panneau avant (10) et ledit premier disjoncteur pour câblage (8) est plus grande qu'une distance entre ledit panneau avant (10) et ledit deuxième disjoncteur pour câblage (6) et
un premier élément de châssis (15) monté sur ladite première portion d'ouverture (10a) a une plus grande dimension de profondeur que la dimension de profondeur d'un deuxième élément de châssis monté sur ladite deuxième portion d'ouverture.

2. Tableau de commutation selon la revendication 1, dans lequel ladite portion d'ouverture (10a) a une forme de quadrilatère et ledit élément de châssis (15) a une portion de paroi supérieure (15d), une portion de paroi inférieure (15h), une portion de paroi latérale droite (15d) et une portion de paroi latérale gauche (15d) qui s'étendent en direction de la profondeur.

3. Tableau de commutation selon la revendication 2, dans lequel ladite portion de paroi inférieure (15h) est inclinée vers le bas en direction dudit panneau avant (10).

4. Tableau de commutation selon la revendication 2 ou 3, dans lequel ledit élément de châssis (15) a une portion de paroi arrière (15c) reliée aux extrémités de profondeur de ladite portion de paroi supérieure (15d), de ladite portion de paroi inférieure (15h), de ladite portion de paroi latérale droite (15d) et de ladite portion de paroi latérale gauche (15d) et
une ouverture (15b) pour exposer ladite partie effectuant le contact (8b) est formée dans ladite portion de paroi arrière (15c).

5. Tableau de commutation selon l'une quelconque des revendications 1 à 4, dans lequel le tableau de commutation comprend un grand nombre de coffrets individuels (2, 3, 4, 5) empilés à la verticale chacun ayant la forme d'un parallélépipède rectangle,
le panneau avant dudit tableau de commutation est formé par une paroi avant (10) dudit coffret individuel,
ledit disjoncteur pour câblage (8) est monté sur la paroi arrière (9c) de chacun desdits coffrets individuels et
ledit élément de châssis (15) est monté sur la paroi avant (10) de chacun desdits coffrets individuels.

6. Tableau de commutation selon la revendication 5, dans lequel ledit grand nombre de coffrets individuels (2, 3, 4) a la même dimension en largeur vu du côté avant et est relié à une plaque latérale du tableau de commutation sur leurs côtés.
